# EUROPEAN PATENT SPECIFICATION

(11) **EP 1 212 181 B1**
(45) Date of publication and mention of the grant of the patent: **15.06.2005**
(21) Application number: 00964844.5
(22) Date of filing: 11.09.2000
(51) Int. Cl.: B29C 33/42

(54) **A METHOD FOR THE MANUFACTURING OF A MATRIX AND A MATRIX MANUFACTURED ACCORDING TO SAID METHOD**
VERFAHREN ZUR HERSTELLUNG EINER MATRIX UND NACH DIESEM VERFAHREN HERGESTELLTE MATRIX
PROCEDE DE FABRICATION D'UNE MATRICE ET MATRICE FABRIQUEE SELON CE PROCEDE

(30) Priority: 13.09.1999 SE 9903255
(43) Date of publication of application: 12.06.2002
(73) Proprietor: Gyros AB, 751 83 Uppsala (SE)
(72) Inventor: ÖHMAN, Ove, S-755 91 Uppsala (SE); LARSSON, Olov, S-114 21 Stockholm (SE)
(86) International application number: PCT/SE2000/001755
(87) International publication number: WO 2001/019586

(56) References cited:
- EP-A2- 0 400 672
- US-A- 4 044 939
- US-A- 5 938 989
- DATABASE WPI Week 199307, Derwent Publications Ltd., London, GB; AN 1993-054945, XP002908956 & JP 5 004 232 A (TOHOKU NAKATANI KK) 14 January 1993 & PATENT ABSTRACTS OF JAPAN & JP 05 004 232 A (TOUHOKU NAKATANI:KK)
- DATABASE WPI Week 199841, Derwent Publications Ltd., London, GB; AN 1998-475566, XP002908957 & JP 10 202 668 A (TDK CORP) 04 August 1998 & PATENT ABSTRACTS OF JAPAN & JP 10 202 668 A (TDK CORP)

## Description

### Technical field

The present invention relates in the first place to a method for the manufacture of a matrix a provided with a microstructure according to the preamble of claim 1.

The invention relates in the second place to a matrix provided with a microstructure which is manufactured in accordance with the method, and is suitable for use in a compression-moulding, embossing and/or injection-moulding machine.

Matrices of the type under discussion can be manufactured by having a master or an original, with a (positive) microstructure on its surface coated with a number of layers of metal, removing the metal layers, with a (negative) micro-structure, from the master, which thus forms a metal plate serving as a matrix or mould-cavity insert in the compression-moulding, embossing and/or injection-moulding machine. Reference is made to EP-0 400 672 which discloses a method and a matrix according to the preambles of claims 1 and 19.

The expression "positive" surface structure shall be understood to mean the surface structure that appears on a plastic component produced from the plastic material in a machine, and "negative" surface structure shall be understood to mean its inverse surface structure, i.e. the surface structure displayed by a matrix or mould-cavity insert in the machine used.

"Plastic composite" shall be taken to mean a mixture of a polymer material and a curable filler material, where the filler material is usually in excess.

The method associated with the present invention shall be deemed applicable for directly producing a matrix or mould-cavity insert for a machine for moulding plastic components, which may then be considered as an original, an original from which another matrix, an original, can be produced, from which a replicated original can be manufactured, etc.

A person skilled in this technical area will perceive that a method for manufacturing a matrix serving as a mould-cavity insert could very well be used for manufacturing an original, from which said matrix is formed, a superior original from which said original can be formed, and so on.

### Background art

When replicating microstructures on plastic components manufactured in a machine of the type described in the introduction, it is known and usual to first manufacture an original or master in a suitable manner, and from this master manufacture a matrix in the form of a mould-cavity insert for the machine.

A known method of manufacturing such a master entails the use of known lithographic methods.

It is in this case advantageous to select lithographic methods that have been developed primarily for use in the micro-electric field.

One of these methods is based on performing etching and/or depositions on the surface of a semiconducting material.

Other methods are based on removing parts of the material with the aid of a laser, so-called laser ablation, using conventional NC machines, with the aid of a precision-controlled diamond cutter with high-speed spindle, with the aid of wire or electro-erosion and/or some other suitable method.

Such originals or masters are usually manufactured in a material suitable for the selected treating method.

In the case of lithographic processes, therefore, the material is usually a plate or a sheet of silicon, glass or quartz, whereas for laser ablation, the material selected is usually a plate or a sheet of a plastic composite and/or a polymer.

For material machining both plastic and relatively soft metals may be suitable.

It is well known that the demands placed on a selected replication process for a certain choice of material in the matrix or mould-cavity insert and the plastic component are not the same as those that must be placed on the original or the master.

It may thus be mentioned that when injection-moulding plastic components in a machine, in which one or more surface parts shall display a micro-structure, mould halves pertaining to the machine and matrices or mould-cavity inserts used for one or both mould halves must be made of a stable material that will withstand the high pressures prevailing during the manufacturing process, and that will not be worn down unnecessarily quickly by the thermal and mechanical wear the mould parts and matrix are subjected to during the moulding process.

It is known to manufacture such matrices, particularly matrices used in microsystem context, by having the shape and surface structure of a master transfer to a metal sheet formed as a matrix.

Such manufacture is based on first manufacturing a master on the surface of a plate or sheet of glass, a semi-conducting material or metal, coating the surface with a light-sensitive layer and, via laser or the like, exposing selected surface sections of this light-sensitive layer, and then washing and cleaning these selected surface sections.

A metal layer is then applied on this exposed and cleaned surface by means of a sputtering process and/or a vaporising process and, if necessary, a plating process for a sufficient length of time for a metal sheet to be formed.

When the metal sheet is removed from the master it can display a first surface with a negative microstructure and can serve as a matrix or a mould-cavity insert, after additional machining, a plaining machining, of a second surface facing the mould half in the machine.

This is the method that is currently used for manufacturing a matrix or mould-cavity insert for inclusion in an injection moulding machine, intended for the manufacture of optical plates or discs.

It is known to coat an electrically insulating plate or disc serving as master or matrix and having a microstructure, with a thin layer of metal by means of a sputtering and/or vaporising process.

It is known to coat an electrically insulating plate or disc or layer serving as matrix and having a microstructure, with a considerably thicker layer of metal by means of a plating process.

It is known via a plating process to coat a disc intended as matrix, with an electrically conducting layer such as nickel, silver, gold or the like.

It is also usual to have an applied metal layer contacted and a disc immersed in a solution consisting of, amongst other things, metal ions, whereupon a current is forced through the solution towards the disc and metal ions are precipitated out as a pure metal on the surface. It is thus possible to produce a structure in the metal that has a function inverse to the microstructure on the master.

It has been found that the method described above is simple to use for relatively flat structures, particularly when the depth of the microstructure is limited to and chosen less than approximately 0.2 µm.

In conclusion, it can be ascertained that different methods can be used to produce originals with different microstructures.

It is thus known, during working of one and the same material (silicon plate or disc) to create, in several processes, different micro and surface structures on different surface sections, to be transferred to a matrix.

The time it takes to manufacture an original is substantially the sum of the times required for each process used.

In the following description, thus, a first method is mentioned for manufacturing an original with a first type of microstructure, a second method for manufacturing an original with a second type of microstructure, and so on, in which a first matrix manufactured via the first original and a second matrix manufactured via the second original will be used.

### Description of the present invention

### Technical problems

Considering that the technical deliberations a person skilled in the art must perform in order to be able to offer a solution to one or more of the technical problems posed constitute initially an insight into the measures and/or the sequence of measures to be taken, and also a selection of the means required, the following technical problems should be relevant in developing the object of the present invention.

Considering the prior state of the art as described above, it would appear to be a technical problem to be able to propose a simple method for manufacturing a matrix adaptable for use in a compression-moulding, embossing and/or injection-moulding machine in which the matrix is provided with a negative microstructure on its surface and which microstructure is reproduced in the machine as a positive microstructure on a surface part of a plastic component produced via a utilised plastic composite or plastic material, thereby creating an inexpensive matrix with a sharp microstructure where the matrix may serve as mould-cavity insert and may display a microstructure section of a first type, or a second type, etc., like a hybrid.

It should also be considered a technical problem, with the aid of a number of originals, manufactured in accordance with individual manufacturing processes, and/or a number of matrices produced from these originals, to create such conditions that the time required for producing a mould-cavity insert can be substantially reduced, despite complex surface sections for said insert.

A technical problem is also entailed in being able, using simple means, to create such conditions that said mould-cavity insert can be assigned a microstructure-related first wear surface formed on a first layer, with an adaptable and relatively high wear resistance.

It is also a technical problem to be able, using simple means and measures, to create conditions enabling a matrix to be built up of at least two layers, a thin first wear layer displaying said microstructure-related surface, and a thicker layer reinforcing this thin layer, the thicker layer being termed "carrier" in the following.

It should also be deemed a technical problem to be able to advocate a method for manufacturing a matrix in which a first master, with a first chosen microstructure, can be produced via a first process and a second master, with a second chosen microstructure, can be manufactured via a second process, separate from the first, and in which the whole or selected parts of matrices manufactured from said first and second masters are combined to form said matrix.

It is also a technical problem to be able to perceive the significance of and the advantages associated with manufacturing said first master with a number of similar or dissimilar surface sections, each of these, transferred to a matrix, being removable to form a first matrix section (= first matrix part).

It is also a technical problem to be able to perceive the significance of and the advantages associated with manufacturing said second master with a number of similar or dissimilar surface sections, each of these, transferred to a matrix, being removable to form a second matrix section (= second matrix part).

It is also a technical problem to be able to perceive the significance of and the advantages associated with one or more first matrix sections and one or more second matrix sections being applied with their microstructured surfaces on a support, where a sheet of nickel such as a flat sheet with polished surface, a mirror surface, is chosen as support.

A technical problem is entailed in being able to perceive the conditions for and advantages associated with said first matrix or a first matrix section, and said second matrix or a second matrix section, and/or one or more additional matrices or matrix sections, being pressed against the support at least while they are being covered by a first wear layer.

It is furthermore a technical problem to be able, using simple measures, to create such conditions that the material of a first, thin layer and the material of a second, thick layer or carrier can be selected having such properties and/or thicknesses that they can fulfil predetermined requirements and conditions for a mould-cavity insert.

It is also a technical problem to be able to perceive the significance of and the advantages associated with said matrix being manufacturable by a master with a microstructure assigned to its surface being coated with metal by means of a metal coating process, and coating the thin metal layer with a plastic composite to form said carrier.

It is also a technical problem to be able, using simple means and measures, to manufacture a matrix formed substantially or exclusively from a plastic composite, usable in a machine, where the time required for manufacture of the matrix from a master is considerably reduced, partly by being able to entirely eliminate, or at least considerably reduce, the time required for forming a flat reverse side of a matrix from the plastic composite, which rear side can abut tightly against one of the two mould halves in the machine.

It is also a technical problem to be able to perceive the significance of using a master for the manufacture of the matrix, and applying a thin layer of metal to its positive microstructure surface, and for said metal layer, on the rear side of the microstructure, to display irregularities substantially corresponding to the microstructure, and to also perceive the advantages of filling said irregularities with a supporting plastic composite that, after curing or the like, forms a supporting carrier in the form of a layer, instead of building up the entire matrix with a thick metal layer.

It is also a technical problem to be able to perceive the significance of such filling of a chosen plastic composite and the formation of a carrier taking place in a special mould cavity.

It is also a technical problem to be able to perceive the significance of and the advantages associated with the plastic composite, and thus the carrier, being selected from a mixture of a plastic or polymer material and a filler material such as quartz or metal-filled epoxy or silicon polymer.

It is also a technical problem to be able to perceive the significance of and the advantages associated with the plastic composite used, and thus the carrier formed, being chosen with a coefficient of linear expansion and/or a heat transfer capability and/or a thermal capacitive capability suitable for a chosen process in the machine used.

A technical problem is also entailed in making use of a specifically chosen curing process in order to assign the chosen plastic composite a hardness and/or curing time dependent on the application by supplying heat to selected portions of the plastic composite or compound and/or illuminating the plastic composite or compound with UV light or, alternatively by the plastic composite being selected as a two-component type.

A technical problem is entailed in being able to perceive the significance of adapting a first wear layer and/or a thin metal layer and selecting the plastic composite, and thus the carrier, with a low heat transfer capability in order to keep the plastic compound pressed out into the machine and between the mould halves hot.

It is also a technical problem to be able to perceive the significance of and the advantages associated with, as well as the dimensioning rules required for, applying a second layer on the surface of the carrier facing away from the microstructured surface of the metal layer.

It is also a technical problem to be able to perceive the significance of selecting said second wear layer from a material displaying the properties of low friction against the flat surface of the mould half and high durability, such as titanium nitride or DLC (Diamond-Like-Carbon).

It is also a technical problem to be able to perceive the significance of said thin metal layer being applied on the master or original, if this consists of a non-electrically conducting material, by means of a sputtering process and/or a vaporising process or, if this consists of an electrically conducting material or an applied thin metal layer, by means of a plating process.

A technical problem is also entailed in, depending on the application in question, selecting the thickness of the metal layer in the injection-moulding machine within predetermined limits.

A technical problem is also entailed in being able to perceive the significance of and the advantages associated with creating such conditions that plaining of the rear side of the matrix and the carrier is considerably simplified and/or entirely eliminated.

### Solution

To provide a solution to one or more of the technical problems listed above, the present invention is based on a method for the manufacture of a matrix, such as one provided with a (negative) microstructure on its surface, which microstructure is reproducible in a plastic composite or material as an inverted or complementary (positive) microstructure on a plastic component, in an injecting-moulding machine.

The invention is based on said matrix being manufactured by having a master or an original with a microstructure on its surface coated with a covering material.

The method in accordance with the invention relates particularly to a first master with a first chosen microstructure being produced via a first method, a second master with a second chosen microstructure being produced via a second method and, if necessary, one or more additional masters with chosen microstructures being produced via additional chosen methods.

It is also advocated that said first and second masters, or a matrix formed therefrom, be applied or placed with their microstructured surfaces adjacent.

Said first and second masters or matrices shall thereafter be covered with a layer pertaining to a first matrix, after which said layer is covered by a thicker layer, a carrier.

Said first and second first layers pertaining to the matrix, and said carrier, are now removed from said masters as a matrix-related unit.

Preferred embodiments falling within the scope of the present invention propose that said first master is produced having a number of similar or dissimilar surface sections, and that each of these, transferred to a matrix, is removed to form a first matrix section.

Said second master may also be produced having a number of similar or dissimilar surface sections, each of these, transferred to a matrix, is removed to form a second matrix section.

One or more first matrix sections and one or more second matrix sections and/or further additional matrix sections are applied with their microstructured surfaces on a support.

A sheet of nickel may advantageously be chosen as the support, said sheet usually consisting of a flat sheet with polished surface, like a mirror surface.

Said first master or a first matrix section, and said second master or a second matrix section, etc., are pressed against a support at least while they are being covered by a first wear layer.

The first master or first matrix section has been provided with a first type of one amongst several selectable microstructures, the second master or the second matrix section has been provided with a second type of one amongst several selectable microstructures, and so on.

In accordance with proposed embodiments of the present invention pouring in a plastic composite, in order to smooth out irregularities, may be performed in a mould cavity.

It is also proposed that the plastic composite, and thus the carrier, may be selected from a polymer material and a filler material such as quartz or metal-filled epoxy or silicon polymer.

The plastic composite, and thus the carrier formed, may also be chosen with a coefficient of linear expansion and/or a heat transfer capability and/or a thermal capacitive capability suitable for a chosen process in and the design of the injection-moulding machine.

The plastic composite shall be cured in a manner suitable for injection moulding, such as by the supply of heat and/or illuminated by means of UV light.

The plastic composite could also be selected as a two-component type.

In accordance with the present invention a plastic composite, and thus the carrier, located under a hard wear layer serving as wear surface, shall be selected with a suitable heat transfer and/or thermal capacitive capability for keeping the plastic compound in the machine hot, while at the same time achieving short cycle times.

Also in accordance with the invention said plastic composite, and thus the carrier, may be coated with a second wear layer on the surface facing away from the surface of the first wear layer, in order to reinforce the matrix construction against damage due to wear.

Said second wear layer could consist, for instance, of titanium nitride or DLC.

In accordance with the invention said thin first wear layer may very well consist of a metal layer and this metal layer shall be applied by means of a sputtering process and/or a vaporising process or, alternatively, a plating process.

In accordance with the invention the thickness of the first wear layer, such as the metal layer, shall be selected with care, depending on the application and the design of the injection-moulding machine.

The invention also relates to a matrix suitable for use in a compression-moulding, embossing and/or injection-moulding machine as described above.

### Advantages

The advantages that may be primarily considered characteristic of a method for manufacturing a matrix in accordance with the present invention for a compression-moulding and/or injection-moulding machine are thus that conditions are thereby created for achieving simple manufacture of the matrix by manufacturing a first master via a first process, a second master via a second process and, if necessary, producing matrices from these masters and thereafter combining said matrices or parts thereof to a matrix which is therefore simpler to produce with extremely varied microstructure-related sections, deriving from different manufacturing methods for the originals or masters used.

Adaptation of heat transfer and/or thermal capability of the matrix is thus possible so that the replication ability is increased in the manufacturing process, such as the embossing and/or injection-moulding process, since the plastic material being moulded does not freeze as soon as it comes into contact with the microstructured surface of the matrix but retains its fluidity properties sufficiently long for the microstructure pertaining to the matrix to be efficiently replicated on the plastic component produced.

The features deemed to be primarily characteristic of a method in accordance with the present invention are defined in the characterising part of the appended claim 1, and the features deemed most characteristic for a matrix in accordance with the present invention are defined in the characterising part of the appended claim 19.

### Brief description of the drawings

A currently preferred embodiment of an injection-moulding machine in which a matrix significant for the invention could be used, and a method for manufacturing this matrix, as well as a matrix thus manufactured with the features significant for the invention, will now be described in more detail with reference to the accompanying drawings, in which
- Figure 1: shows schematically a side view of an injection-moulding machine, utilising two mould halves assuming a position co-operating with each other,
- Figure 2: shows the machine illustrated in Figure 1, in a position where a heated plastic compound in the form of a plastic composite is pressed through a fixed mould half to a space, formed between two mould halves, in view of compression moulding a plastic component,
- Figure 3: shows the injection-moulding machine when a movable mould half is displaced some way from a fixed mould half and the flat plastic component is removed from the movable mould half,
- Figure 4: shows in perspective a matrix or a mould-cavity insert for insertion into the movable mould half, displaying a microstructure, the microstructure illustrated in simplified form in an enlarged partial view, not necessarily to scale,
- Figure 5: shows a side view and in section an example of a method for manufacturing a matrix of previously known design,
- Figure 6: shows a side view and in section an example of a method for manufacturing a matrix in accordance with the invention,
- Figure 7: shows in perspective a first master divided into a number of identical surface sections,
- Figure 8: shows in an enlarged view and in cross section, details of a matrix produced on the matrix illustrated in Figure 6,
- Figure 9: shows a partial section of a first embodiment of a matrix manufactured in accordance with the invention,
- Figure 10: shows a partial section of a second embodiment of a matrix manufactured in accordance with the invention,
- Figure 11: shows the use of a mould cavity for manufacturing a matrix with a flat rear surface, and
- Figure 12: shows a sequence for manufacturing a matrix in accordance with the invention.

### Description of preferred embodiment

The present invention relates to a method for manufacturing a matrix 2 for a compression-moulding, embossing and/or injection-moulding machine 1.

This matrix or mould-cavity insert 2 is provided with a "negative" microstructure 2a on its surface, which microstructure 2a is reproducible in the injection-moulding machine 1 on a plastic component 3 produced from a plastic material, as a "positive" microstructure 3a.

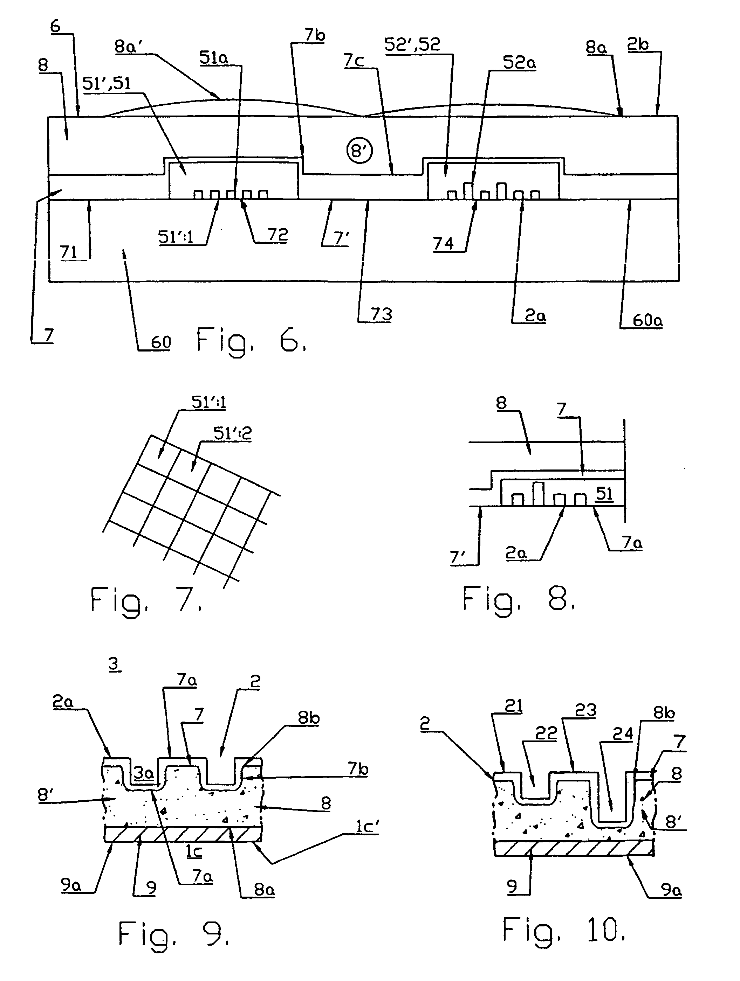

The method for manufacturing a matrix 2 suitable as a mould-cavity insert will be described in more detail, primarily with reference to Figures 6, 7, 8 and 12.

For the sake of simplicity the following description assumes that only the movable mould half 1 c is provided with a mould-cavity insert 2 having a microstructure 2a. However, a person skilled in the art will realise that also the fixed mould half 1d could be provided with such a mould-cavity insert.

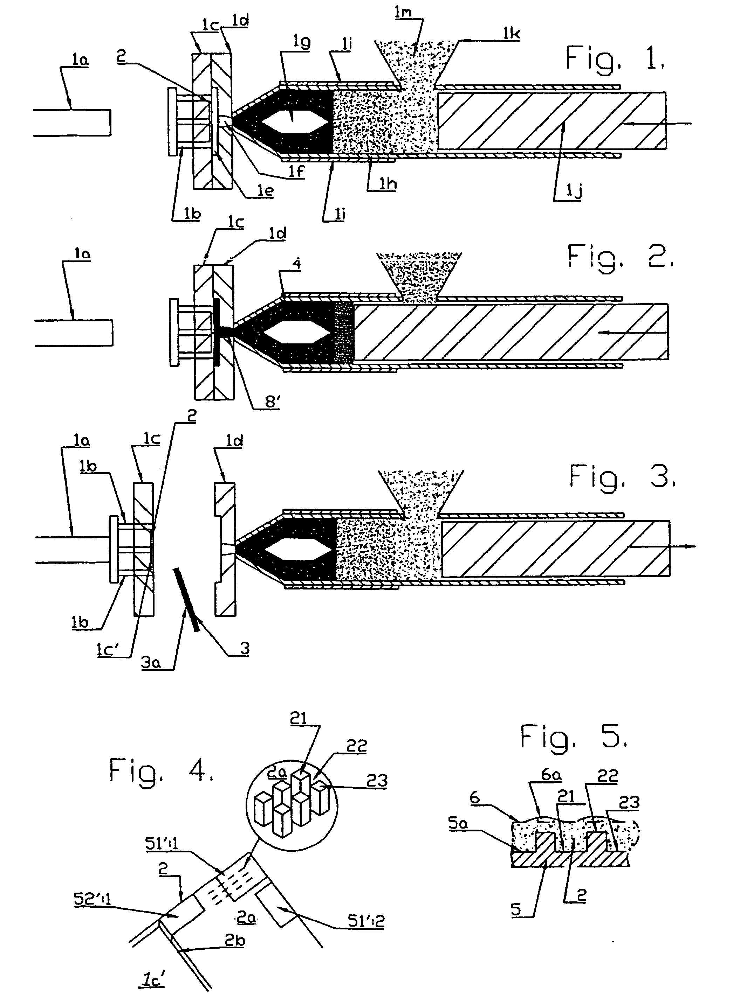

Figures 1-3 show schematically an injection-moulding machine 1 provided with an ejection rod 1a, a number (three) ejection pins 1b, a movable mould half 1c and a fixed mould half 1d.

A cavity 1e, shaped to conform with a flat plastic component 3 produced by injection moulding, is formed between the movable form half 1c and the fixed mould half 1d and displays an inlet 1f.

Figure 1 also illustrates the use of a "torpedo" or "pine apple" 1g, a cylinder wall 1 h, a heating element 1i, an injection ram 1j and a feeding funnel 1 k for granulate or powder 1m.

Figure 2 illustrates how a heated, fluid plastic compound or plastic material 4 surrounds the torpedo 1g and is pressed by a ram 1j through the inlet 1f to the cavity and into the cavity 1e, the mould halves 1c, 1d assuming the united position shown in Figure 1.

Figure 3 shows that the movable mould half 1c is moved a suitable distance from the mould half 1d and, with the aid of the ejector rod 1a and ejector pins 1 b the flat plastic component 3 is released from the movable mould 1 c and the plastic component 3 falls out of the mould half 1c.

Figure 4 shows, greatly simplified and in perspective, a matrix 2 shaped to a plate or disc and provided with an upwardly facing microstructure 2a assigned to the surface.

This microstructure is usually extremely complex. However, a very simplified embodiment is illustrated in Figure 4, enlarged but without any claim of being to scale.

For the sake of simplicity and clarity the following description will relate only to a first raised part 21, an intermediate recess 22 and a second raised part 23, all pertaining to the microstructure.

The matrix or mould-cavity insert 2 is thus provided with a negative microstructure 2a on its surface.

The matrix 2 comprises a disc or plate with a flat lower surface 2b, usually a flat, machined surface 2b, and rests against a flat support surface 1c' in the movable mould half 1c.

It is important here that a flat surface 2b pertaining to the matrix is suitable for resting against a flat surface 1 c' of the mould half 1 c, or opposing curved surfaces, so that the matrix 2 can withstand the compressive forces that will be exerted during a manufacturing process, i.e. an injection-moulding process.

Figure 5 shows a cross section through a part of a known matrix 2, the cross section being taken through the raised portions 21 and 23, and the recess 22.

According to the known method, shown in Figure 5, said matrix 2 can be produced by a master 5, with a positive microstructured surface, being coated in known manner with a metal surface, by using only a plating process.

Metal layer upon metal layer is thus built up by the plating process, or equivalent process, on the microstructured surface section 5a of the master 5, so that a first metal layer will be able to cover even the lowest point of the microstructured surface part 5a.

Since such a plating process will provide a metal layer in which the upper surface is irregular due to the surface structure 5a, the plating process must continue to apply metal layer upon metal layer to a total thickness which, over the entire surface, will exceed a predetermined value or a plane designated 6 in Figure 5.

In practice, the previously known method now requires all the metal material placed above the surface 6, designed 6a, to be ground away in some way or another.

The plating process for layers as thick as is the case here takes an extremely long time, as well as grinding the excess metal material 6a down to the plane 6 also being time-consuming.

The present invention also uses a master 5 for manufacturing a matrix or mould-cavity insert 2. This master could in principle be manufactured in the same way as the master 5 in Figure 5.

The present invention comprises in the first place a method for the manufacture of a matrix or mould-cavity insert 2 provided with a microstructure on its surface, which microstructure is reproducible in a plastic material as an inverted microstructure in a machine used, said microstructure being manufactured by having a master with a microstructure on its surface coated with a layer, and in the second place to a matrix thus manufactured.

The invention is shown in Figure 6 using a first master 51 with a microstructure 51a, manufactured via a first method or a matrix 51' manufactured from such a master, and a second master 52 with a microstructure 52a produced via a second method or a matrix 52' manufactured from such a master, these being combined to form a hybrid matrix.

A hybrid matrix is a matrix that has a microstructured surface emanating from two or more masters or matrices produced from two or more manufacturing methods, each appropriate for a chosen microstructure.

Said first master 51 and second master 52, or matrix parts (= matrix sections) 51', 52', can now be applied, with their microstructured surfaces 51 a, 52a, against a support 60.

Said first and second masters 51,52 or said first and second matrix parts 51', 52' can now be coated with a first layer, here designated a support layer 7.

Said layer 7 shall then be covered by a thicker layer, a carrier 8.

Said first and second masters 51,52 or said first and second matrix parts 51', 52', together with said first layer 7 and said carrier 8 are now removed from the support 60 as a matrix-related unit.

Should the surfaces, 71, 72, 73 and 74 thus exposed not be suitable for direct application in a unit for forming plastic components, it is suggested that the surfaces 71, 72, 73 and 74 in Figure 6 be provided with a wear layer 7', or the surfaces 71, 72, 73 and 74 may form surfaces for manufacturing a new matrix.

This method is associated with the method shown and described in Swedish patent application 99 03232-8, filed 10 September 1999 under the title "A method for the manufacture of a matrix and a matrix manufactured according to said method".

Figure 7 illustrates that a first master can be manufactured in a first manufacturing process, with a number of identical surface sections 51:1, 51:2, whereupon a matrix manufactured from this master will also display a corresponding number of identical surface sections, two of which have been designated 51':1, 51':2, and each of these can be separated in order to form matrix sections, such as a first matrix section 51':1 in Figure 4.

A second master can also be manufactured having a number of identical surface sections, and a matrix manufactured from this master can also display. a corresponding number of identical surface sections, and each of these can be separated to form a second matrix section. This is not shown in more detail but is obvious to one skilled in the art.

One or more first matrix sections, one or more second matrix sections, one or more additional matrix sections are applied with their microstructured surfaces against said support 60 in an order and an orientation that will conform with the desired result on a matrix and/or a plastic material produced.

A sheet of nickel is chosen as support 60, said nickel sheet preferably consisting of a flat sheet with a polished surface 60a, like the surface of a mirror.

Said first master or a first matrix section and said second master or a second matrix section, etc., are pressed against the support 60, at least while they are being covered by a first layer 7 by means not shown in detail.

The first master 51 or matrix section 51'has been provided with a first type of one among several selectable microstructures.

The second master 52 or matrix section 52' has been provided with a second type of one among several selectable microstructures, and so on.

In accordance with the present invention these microstructured surfaces 51a, 52a may be covered with a thick wear layer.

Figure 6 shows, somewhat exaggerated, that parts of a machined matrix material, such as the surfaces 71, 72, 51a and 52a, form islands in an applied layer 7.

There is nothing to prevent a thin wear layer 7' (see Figure 8) from being applied on the surfaces 71, 72, 51 a and 52a, as well as the layer 7, after the matrix has been removed from the support 60.

This thin wear layer 7' shall display an outer first wear surface 7a. (By "wear surface" 7a is here meant a surface against which the hot liquid plastic material shall be pressed and against which wear surface the plastic component 3 shall be moulded before being fed out of the mould halves 1c, 1d.) This wear layer 7', which forms the first wear surface 7a, shall be so thin say up to 2 µm, that it will display a negative outer microstructure 2a corresponding directly to the positive microstructure 5a of the master 5.

Persons skilled in the art are well aware that methods and procedures used here result in different thicknesses for the layer 7 and 7' and a thickness and a method must be selected that are suitable for the chosen application.

This first wear layer 7 and 7' could consist of a plastic composite or other hard material. However, the following description is aimed at illustrating this thin first metal layer or wear layer 7, 7' as a metal layer.

This metal layer 7, 7' can be applied using known technology, such as sputtering or vaporisation.

In accordance with the invention the uppermost surface 7b of said thin metal layer 7 in Figure 6 will display microstructured parts 51, 52 corresponding substantially to the irregularities 7b.

In accordance with the invention, said irregularities 7b shall be filled in a second step with a chosen plastic composite 8'. The plastic compound for this plastic composite 8' shall be hot and thinly fluid so that it will be able to cover all the recesses 7c and so that the plastic composite can form a smooth upper surface 8a.

Figure 6 illustrates an embodiment in which a plastic composite 8' is poured in in order to form a carrier 8 so that a small amount 8a' will be situated above the plane 6 and an imagined flat surface 8a, and the raised plastic material 8a' can easily be removed by a mechanical plaining process.

The matrix 2, in the form of a carrier 8 and a thin first wear surface 7a, is applied in the movable mould half 1c, with the surface 2b (6) in contact with the surface 1c'.

The invention also assumes that pouring in the plastic composite 8' to form a carrier 8 can very well be performed under pressure in a mould cavity in such a way that machining of the rear side will not be necessary.

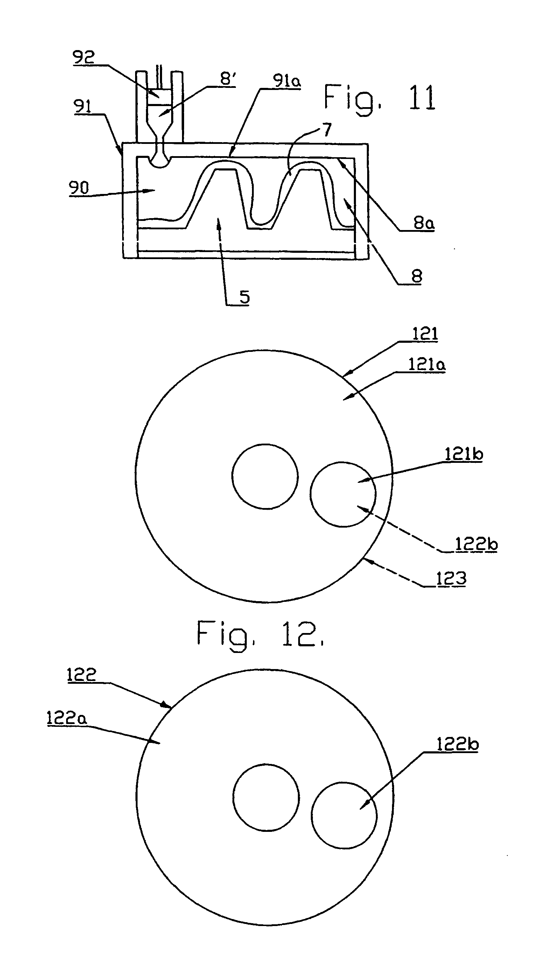

This third step in the manufacturing process is described in more detail with reference to Figure 11.

Many opportunities for adaptation are offered by advocating the use of a plastic composite 8' and a carrier 8 formed therefrom.

It is well known that various polymer materials and mixtures thereof mixed with different filler materials and mixtures thereof give different properties, and also that the curing process and curing time chosen affect the final properties of the plastic composite.

These known directives offer a number of different possibilities applied on a matrix in accordance with the invention.

It is thus possible to select a plastic composite 8' from a polymer material mixed with a filler, such as a quartz or metal-filled epoxy or silicon polymer.

The present invention also proposes that the plastic composite 8' and a carrier 8 formed therefrom may be chosen with a coefficient of linear expansion and/or a heat transfer capability and/or a thermal capacitive capability suitable for a chosen process and/or nature of the machine used.

The plastic composite 8' may be cured by the supply of heat and/or illumination by means of UV light. These curing possibilities can be used with advantage so that the required degree of curing and rigidity of the plastic composite can be adjusted.

There is nothing to prevent the plastic composite being selected from two-component types.

Figures 9 and 10 illustrate that a selected plastic composite 8' for forming a carrier 8, placed against the hard metal layer 7 serving as a first wear surface 7a, is selected with a suitably low heat transfer capability and/or a suitably high thermal capacitive capability so that this plastic composite 8' and carrier 8 will be able to serve as thermal insulation against the mould half 1c and thus keep the compression-moulded plastic compound material in the machine hot for the time required for producing the microstructured pattern 3a in the plastic component 3.

In many cases, to ensure exact microstructure-related transfer, the heat and temperature of a compression-moulded plastic material must be retained in the plastic material without being passed over too quickly to the mould half 1c.

Also in accordance with the invention said matrix 2, as shown in Figures 9 and 10, is coated with or applied on a second wear layer 9 with a second wear surface 9a. This layer 9 is coated on the surface 8a of the carrier 8 facing away from the metal layer 7, and may consist of a durable layer and/or a heat-insulating layer.

The properties of this second wear layer 9 shall be to display a wear surface 9a with low friction against the surface 1c' of the mould half 1c, and high wear resistance, since the pressure between matrix 2 and mould half 1c is considerable during the moulding process and thermal stresses tend to displace the matrix 2 in relation to the mould half 1c.

The second wear layer 9 may here advantageously consist of titanium nitride or DLC (Diamond-Like-Carbon).

For certain applications there is nothing to prevent a chosen material for the second wear layer 9 also constituting the material for the thin fist wear layer 7a, with a carrier 8 made of plastic placed between them.

The thin metal layer 7 may be applied by means of a sputtering process and/or a vaporising process or, alternatively, a plating process.

Figure 10 shows an alternative embodiment with a wear-resistant second wear layer 9, a carrier 8 formed from a plastic composite 8', and a thin first wear layer in the form of a metal layer 7, where a recess 22 having been added to the dimension shown in Figure 4 and an adjacent recess 24 having been chosen considerably deeper than the recess 22 without, however, departing from the significant features of the invention.

Furthermore, a carrier 8 with carrier surface 8b for the thin first wear layer 7 and/or this layer 7 may consist of a plastic composite 8' with a coefficient of linear expansion and/or a heat transfer capability and/or a thermal capacitive capability suitable for a chosen process and/or to the relevant embodiment of the injection-moulding machine used.

The carrier 8 may also consist of a plastic composite that can be assigned different degrees of curing ability by supplying different degrees of heat and/or illumination by means of UV light.

The carrier 8 may also consist of a material with low heat transfer capability and high thermal insulation and/or thermal capacitive capability.

There is nothing to prevent the carrier 8 being reinforced using means known per se. The carrier 8 can thus be reinforced with an additional wear-resistant layer 9 on its surface facing away from the metal surface 7.

Although the invention is described in the above embodiment by way of example in that a thin wear layer 7 is supported by a thicker plastic layer or carrier 8, it may be suitable in certain applications for these two wear layers to consist of the same plastic material.

There is nothing to prevent allowing the wear layer 7 to harden first, preferably at a high degree of curing, and the supporting plastic layer or carrier 8 later, at a lower degree of curing.

Figure 11 shows the possibility of applying the plastic composite 8' to a mould cavity 90 in the form of a mould 91, by means of an overpressure from a ram 92 so that the surface 8a of the carrier 8 becomes flat, conforming with the surface section 91 a of the mould 91.

This flat surface 8a can now be applied directly against the support surface 1 c' of the mould half 1 c.

As regards the thickness of the layer 7, a basic rule is that it shall be thick enough not to collapse or crack for a chosen number of casting cycles. In practice this means a thickness of 1-5 µm.

More generally, it is probably advisable for the thickness to be chosen between 1 and 50 µm, preferably less than 20 µm.

However, for certain applications layers as thin as about 0.1 µm can be accepted, depending partly on the choice of material in the carrier 8.

The thickness of the wear layer 9 may be chosen between 1 and 50 µm, preferably less than 20 µm.

The microstructure 2a may vary in depth between 0.1 and 1000 µm, preferably over 100 µm.

Figure 12 shows an alternative embodiment of the application of the invention.

A first matrix 121 with a fine microstructure 121 a is manufactured in a first master (not shown), and a second matrix 122 with a coarse micro-structure 122a is manufactured in a second master.

A surface section 121b is punched out of the matrix 121 and removed.

A corresponding surface section 122b is punched out of the matrix 122 and placed where the surface section 121b was previously.

A matrix 123 has thus been created, in which large surface areas have a fine microstructure, with an island of a coarse microstructure.

The method shown in Figure 12 involves the following process steps:
1. Manufacturing a first original with a fine microstructure, for instance, by means of lithography, with the aid of a laser, etching processes, precipitation, mechanical micromachining.
2. Manufacturing a second original with a coarse microstructure, for instance.
3. Manufacturing a matrix (121, 122) from the first and the second original.
4. Manufacturing a matrix original (123) containing parts of the first and the second matrices.

It is here suitable to reinforce the matrix original with a carrier or form a matrix from the matrix original.

The invention is naturally not limited to the embodiment described above by way of example, but may be modified within the scope of the inventive concept as defined in the appended claims.

## Claims

1. A method for the manufacture of a matrix (2) provided with a microstructure (2a) on its surface, which microstructure (2a) is reproducible i) in a plastic material (3) as an inverted microstructure (3a) in a compression-moulding, injection-moulding or embossing machine (1) or ii) for the manufacturing of another matrix comprising the microstructure (2a), said microstructure (2a) of said matrix (2) being produced by having a master (5) with a microstructure (5a) on its surface coated with a layer, **characterized in that**
a) a first master (51), with a first chosen microstructure (51a), is produced via a first method,
b) a second master (52), with a second chosen microstructure (52a), is produced via a second method, .
c) said first and second masters (51 and 52) or a first and a second matrix section (51' and 52') manufactured from said first and second masters, respectively, are applied with their microstructured surfaces (51a,52a) adjacent and against a support (60),
d) said first and second masters (51 and 52) or said first and second matrix sections (51' and 52') are covered by a first support layer (7),
e) said support layer (7) is covered by a carrier, and
f) said support layer (7) and said carrier layer (8) together with said first and second masters or matrix sections (51,52 or 51',52') are removed from said support (60) as a matrix-related unit.

2. A method as claimed in claim 1, **characterized in that** the first matrix section is formed by producing a first master having a number of identical or similar or dissimilar surface sections, transferring the sections of the master to a matrix to obtain a matrix comprising matrix sections (51':1, 51':2 etc) corresponding to said sections of the master, separating one or more of said matrix sections from the other matrix sections and using said separated matrix secions as a first matrix section (51').

3. A method as claimed in claim 1, **characterized in that** the second matrix section is formed by producing a second master having a number of identical or similar or dissimilar surface sections, transferring the sections of the master to a matrix to obtain a matrix comprising matrix sections (52':1. 52':2 etc) corresponding to said sections of the master, separating one or more of said matrix sections from the other matrix sections and using said separated matrix sections as a second matrix section (52').

4. A method as claimed in claim 1, **characterized in that** a sheet of nickel is chosen as the support (60).

5. A method as claimed in claim 4, **characterized in that** said sheet consists of a flat sheet with polished surface, a mirror surface.

6. A method as claimed in claim 1, **characterized in that** said first master (51) or said first matrix section (51'), and said second master (52) or a second matrix section (52'), are pressed against a support (60) at least while they are being covered by said support layer (7).

7. A method as claimed in claim 1, **characterized in that** the first master (51) or the first matrix section (51') has been provided with a first type (51a) of one amongst several selectable microstructures.

8. A method as claimed in claim 1, **characterized in that** the second master (52) or matrix section (52') has been provided with a second type (52a) of one amongst several selectable microstructures.

9. A method as claimed in claim 1, **characterized in that** said carrier (8) is formed by filling a mould cavity (90) with a plastic composite (8').

10. A method as claimed in claim 1 and claim 9, **characterized in that** the plastic composite (8') is selected from a mixture of a polymer material and a filler material.

11. A method as claimed in claim 10, **characterized in that** said plastic composite is quartz or metal-filled epoxy or silicon polymer.

12. A method as claimed in claim 1 or claim 9, **characterized in that** the plastic composite (8') is cured by the supply of heat and/or by being irradiated by UV light.

13. A method as claimed in claim 1 or claim 9, **characterized in that** the plastic composite (8') is selected from two-component types.

14. A method as claimed in claim 1 or claim 10, **characterized in that** the matrix is coated with a wear layer (9) on the surface facing away from the surface of the support layer (7).

15. A method as claimed in claim 1, claim 9 or claim 14, **characterized in that** the support layer (7) is covered with a wear layer (7'), said wear layers (7') and (9) consisting of titanium nitride or Diamond-Like-Carbon.

16. A method as claimed in claim 1 or claim 9, **characterized in that** said support layer (7) is a wear layer is a metal layer and is applied by means of a sputtering process and/or a vaporising process or a plating process.

17. A method as claimed in claim 1, claim 9 or claim 16, **characterized in that** support layer (7) is selected having a thickness larger than about 0.1 µm.

18. A method as claimed in claim 1 or claim 9, **characterized in that** the surface structure of the plastic composite on the surface facing away from the support layer (7), is machined flat.

19. A matrix (2) provided with a microstructure (2a) on its surface manufactured by the method of claims 1 to 18, **characterized in that**
a) said microstructure comprises microstructured surfaces (51a,52a) of a first and a second master (51,52) or of a first and a second matrix section (51',52') produced from said first and said second master (51,52), respectively, which surfaces are oriented adjacent each other,
b) said first and second masters (51,52) or said first and said second matrix section (51',52'), respectively, are covered on the side facing away from the microstructured surface by a first layer (7) pertaining to the matrix (2), and
c) said layer (7) is covered by a carrier (8).

## Patentansprüche

1. Verfahren zur Herstellung einer Matrix (2), versehen mit einer Mikrostruktur (2a) auf ihrer Oberfläche, wobei die Mikrostruktur (2a) reproduzierbar ist i) in einem Kunststoffmaterial (3) als invertierte Mikrostruktur (3a) in einer Druckform-, Spritzform- oder Stanzmaschine (1) oder ii) für die Herstellung einer anderen Matrix, umfassend die Mikrostruktur (2a), wobei die Mikrostruktur (2a) der Matrix (2) durch Beschichten einer Vorlage (5) mit einer Mikrostruktur (5a) auf ihrer Oberfläche mit einer Schicht hergestellt wird, **dadurch gekennzeichnet, dass**
a) eine erste Vorlage (51) mit einer ersten ausgewählten Mikrostruktur (51a) mittels eines ersten Verfahrens hergestellt wird.
b) eine zweite Vorlage (52) mit einer zweiten ausgewählten Mikrostruktur (52a) mittels eines zweiten Verfahrens hergestellt wird,
c) die ersten und zweiten Vorlagen (51 und 52) oder ein erster und ein zweiter Matrixabschnitt (51' und 52'), die jeweils aus den ersten und zweiten Vorlagen hergestellt wurden, mit ihren mikrostrukturierten Oberflächen (51a. 52a) nebeneinander und gegen eine Auflage (60) aufgetragen werden,
d) die ersten und zweiten Vorlagen (51 und 52) oder die ersten und zweiten Matrixabschnitte (51' und 52') durch eine erste Auflageschicht (7) bedeckt werden,
e) die Auflageschicht (7) mit einem Träger bedeckt wird, und
f) die Auflageschicht (7) und die Trägerschicht (8) zusammen mit den ersten und zweiten Vorlagen oder Matrixabschnitten (51, 52 oder 51'. 52') von der Auflage (60) als matrixbezogene Einheit entfernt werden.

2. Verfahren nach Anspruch 1, **dadurch gekennzeichnet, dass** der erste Matrixabschnitt durch Herstellen einer ersten Vorlage mit einer Vielzahl identischer oder ähnlicher oder unähnlicher Oberflächenabschnitte, Übertragen der Abschnitte der Vorlage auf eine Matrix unter Erhalt einer Matrix, welche Matrixabschnitte (51':1, 51':2 etc.) entsprechend den Abschnitten der Vorlage umfaßt. Trennen von ein oder mehreren der Matrixabschnitte von den anderen Matrixabschnitten und Verwenden der abgetrennten Matrixabschnitte als ein erster Matrixabschnitt (51') gebildet wird.

3. Verfahren nach Anspruch 1, **dadurch gekennzeichnet, dass** der zweite Matrixabschnitt durch Herstellen einer zweiten Vorlage mit einer Vielzahl identischer oder ähnlicher oder unähnlicher Oberflächenabschnitte, Übertragen der Abschnitte der Vorlage auf eine Matrix unter Erhalt einer Matrix, welche Matrixabschnitte (52':1, 52':2 etc.) entsprechend den Abschnitten der Vorlage umfaßt, Trennen von ein oder mehreren der Matrixabschnitte von den anderen Matrixabschnitten und Verwenden der abgetrennten Matrixabschnitte als ein zweiter Matrixabschnitt (52') gebildet wird.

4. Verfahren nach Anspruch 1, **dadurch gekennzeichnet, dass** ein Nickelblech als Auflage (60) verwendet wird.

5. Verfahren nach Anspruch 4, **dadurch gekennzeichnet, dass** das Blech aus einem glatten Blech mit polierter Oberfläche, einer Spiegeloberfläche besteht.

6. Verfahren nach Anspruch 1, **dadurch gekennzeichnet, dass** die erste Vorlage (51) oder der erste Matrixabschnitt (51') und die zweite Vorlage (52) oder ein zweiter Matrixabschnitt (52') gegen eine Auflage gedrückt werden, mindestens während sie durch die Auflageschicht (7) bedeckt sind.

7. Verfahren nach Anspruch 1, **dadurch gekennzeichnet, dass** die erste Vorlage (51) oder der erste Matrixabschnitt (51') mit einem ersten Typ (51a) einer unter mehreren auswählbaren Mikrostrukturen versehen worden ist.

8. Verfahren nach Anspruch 1, **dadurch gekennzeichnet, dass** die zweite Vorlage (52) oder der Matrixabschnitt (52') mit einem zweiten Typ (52a) einer unter mehreren auswählbaren Mikrostrukturen versehen worden ist.

9. Verfahren nach Anspruch 1, **dadurch gekennzeichnet, dass** der Träger (8) durch Füllen eines Formenhohlraums (90) mit einem Kunststoffkomposit (8') gebildet wird.

10. Verfahren nach Anspruch 1 und Anspruch 9, **dadurch gekennzeichnet, dass** der Kunststoffkomposit (8') ausgewählt ist aus einer Mischung aus einem Polymermaterial und einem Füllstoffmaterial.

11. Verfahren nach Anspruch 10, **dadurch gekennzeichnet, dass** der Kunststoffkomposit Quarz- oder Metall-gefülltes Epoxy- oder Silizium-Polymer darstellt.

12. Verfahren nach Anspruch 1 oder Anspruch 9, **dadurch gekennzeichnet, dass** der Kunststoffkomposit (8') durch Anwenden von Wärme und/oder durch Bestrahlen mit UV-Licht gehärtet wird.

13. Verfahren nach Anspruch 1 oder Anspruch 9, **dadurch gekennzeichnet, dass** der Kunststoffkomposit (8') ausgewählt ist aus Zwei-Komponenten-Typen.

14. Verfahren nach Anspruch 1 oder Anspruch 10, **dadurch gekennzeichnet, dass** die Matrix mit einer Verschleißschicht (9) auf der Oberfläche beschichtet wird, welche von der Oberfläche der Auflageschicht (7) weg zeigt.

15. Verfahren nach Anspruch 1, Anspruch 9 oder Anspruch 14, **dadurch gekennzeichnet, dass** die Auflageschicht (7) mit einer Verschleißschicht (7') beschichtet wird, wobei die Verschleißschichten (7') und (9) aus Titannitrid oder diamantähnlichem Kohlenstoff bestehen.

16. Verfahren nach Anspruch 1 oder Anspruch 9, **dadurch gekennzeichnet, dass** die Auflageschicht (7) eine Verschleißschicht darstellt, welche eine Metallschicht ist und mittels eines Zerstäubungsverfahrens und/oder eines Verdampfungsverfahrens oder eines Metallisierungsverfahrens aufgetragen wird.

17. Verfahren nach Anspruch 1, Anspruch 9 oder Anspruch 16, **dadurch gekennzeichnet, dass** die Auflageschicht (7) ausgewählt wird mit einer Dicke, welche größer als ungefähr 0,1 µm ist.

18. Verfahren nach Anspruch 1 oder Anspruch 9, **dadurch gekennzeichnet, dass** die Oberflächenstruktur des Kunststoffkomposits auf der Oberfläche, die von der Auflageschicht (7) weg zeigt, maschinell geglättet wird.

19. Matrix (2), welche mit einer Mikrostruktur (2a) auf ihrer Oberfläche versehen ist und die durch das Verfahren der Ansprüche 1 bis 18 hergestellt ist, **dadurch gekennzeichnet, dass**
a) die Mikrostruktur mikrostrukturierte Oberflächen (51a, 52a) einer ersten und einer zweiten Vorlage (51, 52) oder eines ersten und eines zweiten Matrixabschnitts (51', 52'), die aus jeweils der ersten und der zweiten Vorlage (51, 52) gebildet sind, umfasst, wobei die Oberflächen zueinander benachbart angeordnet sind,
b) die ersten und zweiten Vorlagen (51, 52) oder der erste und der zweite Matrixabschnitt (51', 52') jeweils auf der von der mikrostrukturierten Oberfläche wegzeigenden Seite durch eine erste Schicht (7), die zu der Matrix (2) gehört, beschichtet sind, und
c) die Schicht (7) durch einen Träger (8) bedeckt ist.

## Revendications

1. Procédé pour la fabrication d'une matrice (2) pourvue d'une microstructure (2a) sur sa surface, cette microstructure (2a) étant reproductible i) dans une matière plastique (3) sous la forme d'une microstructure inversée (3a) dans un moulage par compression, un moulage par injection ou une machine de gaufrage (1) ou ii) pour la fabrication d'une autre matrice comprenant la microstructure (2a), ladite microstructure (2a) de ladite matrice (2) étant produite grâce au fait que l'on a une mère (5) avec une microstructure (5a) sur sa surface revêtue d'une couche, **caractérisé en ce que** :
a) une première mère (51), avec une première microstructure choisie (51a), est produite à l'aide d'un premier procédé,
b) une deuxième mère (52), avec une deuxième microstructure choisie (52a), est produite à l'aide d'un deuxième procédé,
c) lesdites première et deuxième mères (51 et 52), ou une première et une deuxième sections de matrice (51' et 52') fabriquées à partir desdites première et deuxième mères, respectivement, sont appliquées avec leurs surfaces à microstructure (51a, 52a) au voisinage d'un support (60) et contre celui-ci,
d) lesdites première et deuxième mères (51 et 52) ou lesdites première et deuxième sections de matrice (51' et 52') sont recouvertes par une première couche de support 7),
e) ladite couche de support (7) est recouverte par un porteur, et
f) ladite couche de support (7) et ladite couche porteuse (8), avec lesdites premières et deuxièmes mères ou sections de matrice (51, 52 ou 51',52') sont retirées dudit support (60) sous la forme d'une unité associée à une matrice.

2. Procédé selon la revendication 1, **caractérisé en ce que** la première section de matrice est formée en produisant une première mère comportant un certain nombre de sections de surface identiques ou similaires ou dissemblables, en transférant les sections de la mère à une matrice afin d'obtenir une matrice comprenant des sections de matrice (51':1, 51':2, etc.) correspondant auxdites sections de la mère, en séparant une ou plusieurs desdites sections de matrice des autres sections de matrice et en utilisant lesdites sections de matrice séparées comme première section de matrice (51').

3. Procédé selon la revendication 1, **caractérisé en ce que** la deuxième section de matrice est formée en produisant une deuxième mère comportant un certain nombre de sections de surface identiques ou similaires ou dissemblables, en transférant les sections de la mère à une matrice de façon à obtenir une matrice comprenant des sections de matrice (52':1, 52':2, etc.) correspondant auxdites sections de la mère, en séparant une ou plusieurs desdites sections de matrice des autres sections de matrice et en utilisant lesdites sections de matrice séparées comme deuxième section de matrice (52').

4. Procédé selon la revendication 1, **caractérisé en ce qu'**une feuille de nickel est choisie pour le support (60).

5. Procédé selon la revendication 4, **caractérisé en ce que** ladite feuille est constituée par une feuille plate avec une surface polie, une surface de miroir.

6. Procédé selon la revendication 1, **caractérisé en ce que** ladite première mère (51) ou ladite première section de matrice (51'), et ladite deuxième mère (52) ou une deuxième section de matrice (52'), sont pressées contre un support (60) au moins pendant qu'elles sont recouvertes par ladite couche de support (7).

7. Procédé selon la revendication 1, **caractérisé en ce que** la première mère (51) ou la première section de matrice (51') a été pourvue d'un premier type (51a) de l'une parmi plusieurs microstructures pouvant être sélectionnées.

8. Procédé selon la revendication 1, **caractérisé en ce que** la deuxième mère (52) ou section de matrice (52') a été pourvue d'un deuxième type (52a) de l'une parmi plusieurs microstructures pouvant être sélectionnées.

9. Procédé selon la revendication 1, **caractérisé en ce que** ledit porteur (8) est formé en remplissant une cavité de moulage (90) d'un composite de matière plastique (8').

10. Procédé selon la revendication 1 et la revendication 9, **caractérisé en ce que** le composite de matière plastique (8') est sélectionné à partir d'un mélange d'un matériau polymère et d'un matériau de charge.

11. Procédé selon la revendication 10, **caractérisé en ce que** ledit composant de matière plastique est un polymère époxy ou silicone chargé de quartz ou de métal.

12. Procédé selon la revendication 1 ou la revendication 9, **caractérisé en ce que** le composite de matière plastique (8') est durci par la délivrance de chaleur et/par le fait qu'il est irradié par une lumière ultraviolette.

13. Procédé selon la revendication 1 ou la revendication 9, **caractérisé en ce que** le composite de matière plastique (8') est sélectionné parmi des types à deux composants.

14. Procédé selon la revendication 1 ou la revendication 10, **caractérisé en ce que** la matrice est revêtue d'une couche d'usure (9) sur la surface éloignée de la surface de la couche de support (7).

15. Procédé selon la revendication 1, la revendication 9 ou la revendication 14, **caractérisé en ce que** la couche de support (7) est recouverte d'une couche d'usure (7'), lesdites couches d'usure (7') et (9) étant constituées par du nitrure de titane ou du carbone analogue à du diamant.

16. Procédé selon la revendication 1 ou la revendication 9, **caractérisé en ce que** ladite couche de support (7) est une couche d'usure réalisée en une couche métallique, et est appliquée à l'aide d'un processus de pulvérisation cathodique et/ou d'un processus de vaporisation ou d'un processus de plaquage.

17. Procédé selon la revendication 1, la revendication 9 ou la revendication 16, **caractérisé en ce que** la couche de support (7) est sélectionnée de façon à avoir une épaisseur supérieure à environ 1,0 µm.

18. Procédé selon la revendication 1 ou la revendication 9, **caractérisé en ce que** la structure de surface du composite de matière plastique sur la surface éloignée de la couche de support (7) est usinée à plat.

19. Matrice (2) pourvue d'une microstructure (2a) sur sa surface fabriquée à l'aide du procédé selon les revendications 1 à 18, **caractérisée en ce que** :
a) ladite microstructure comprend des surfaces à microstructure (51a, 52a) d'une première et d'une deuxième mères (51, 52) ou d'une première et d'une deuxième sections de matrice (51', 52'), produites à partir de ladite première et de ladite deuxième mères (51, 52), respectivement, ces surfaces étant orientées au voisinage l'une de l'autre,
b) lesdites première et deuxième mères (51, 52), ou ladite première et ladite deuxième sections de matrice (51', 52'), respectivement, sont recouvertes, sur le côté éloigné de la surface à microstructure, par une première couche (7) appartenant à la matrice (2), et
c) ladite couche (7) est recouverte par un porteur (8).
